(19) Europäisches Patentamt

European Patent Office

Office européen des brevets

(11) Veröffentlichungsnummer : **0 039 077**
**B1**

(12) **EUROPÄISCHE PATENTSCHRIFT**

(45) Veröffentlichungstag der Patentschrift :
07.11.84

(51) Int. Cl.³ : **H 04 Q 11/04, H 04 Q 3/66**

(21) Anmeldenummer : 81103150.9

(22) Anmeldetag : 27.04.81

(54) **Zeitmultiplexkoppelfeld.**

(30) Priorität : 30.04.80 DE 3016706

(43) Veröffentlichungstag der Anmeldung :
04.11.81 Patentblatt 81/44

(45) Bekanntmachung des Hinweises auf die Patenterteilung : 07.11.84 Patentblatt 84/45

(84) Benannte Vertragsstaaten :
CH FR GB IT LI SE

(56) Entgegenhaltungen :
EP-A- 0 006 214
FR-A- 2 156 965
FR-A- 2 302 654
FR-A- 2 447 660
1976 INTERNATIONAL ZÜRICH SEMINAR ON DIGITAL COMMUNICATIONS, 9.-11. März 1976, Seiten C1,1-C1.8, Zürich, CH. P.R. GERKE: "Interaction between circuit technology and system concepts in the field of digital TDM switching"

(73) Patentinhaber : **Siemens Aktiengesellschaft Berlin und München Wittelsbacherplatz 2 D-8000 München 2 (DE)**

(72) Erfinder : **Lutz, Karl Anton, Dipl.-Ing. Strähuberstrasse 12 D-8000 München 71 (DE)**
Erfinder : **Knorpp, Eberhard, Dipl.-Ing. Zugspitzstrasse 26 D-8035 Gauting (DE)**

## Beschreibung

Die Erfindung betrifft ein Zeitmultiplexkoppelfeld, insbesonder PCM-Zeitmultiplexkoppelfeld, aus jeweils die zeitliche und räumliche Zuordnung von auf Zeitmultiplexleitungen für ankommende Übertragungsrichtung benutzten Zeitkanälen zu auf Zeitmultiplexleitungen für abgehende Übertragungsrichtung benutzten Zeitkanälen bewirkenden, als blockierungsfrei arbeitende Zeitstufen ausgebildeten Vermittlungseinheiten, an die jeweils mehrer Zeitmultiplexleitungen angeschlossen sind, bei dem wenigstens zwei einstufige Koppelfeldteile gebildet sind, die jeweils so viele Vermittlungseinheiten wie Koppelfeldteile umfassen, und bei denen die an die Vermittlungseinheiten angeschlossenen Zeitmultiplexleitungen für ankommende Übertragungsrichtung auch mit jeweils einem Eingang einer Vermittlungseinheit jedes anderen Koppelfeldteils in Verbindung stehen.

Ein solches Zeitmultiplexkoppelfeld (Zeitschrift « Communication & Electronique », Nr. 40, Jan. 1973, Seite 18) bietet im Hinblick auf Erweiterungsmöglichkeiten Vorteile gegenüber mehrstufigen aus den genannten Vermittlungseinheiten aufgebauten Koppelfeldern. Zweistufige solcher Koppelfelder bedingen nämlich einerseits eine größere Laufzeit bei der Signaldurchschaltung, andererseits sind sie schieflastempfindlich, d. h., daß dann, wenn von einer Vermittlungseinheit der ersten Stufe aus zur gleichen Zeit bevorzugt Verbindungen zu Zeitmultiplexleitungen hergestellt werden sollen, die an ein und dieselbe Vermittlungseinheit der zweiten Stufe angeschlossen sind, es wegen der beschränkten Anzahl von Zwischenleitungen zu einer Blockierung kommen kann. Bei dreistufigen Koppelfeldern besteht diese Schieflastempfindlichkeit zwar nicht mehr, dafür ist jedoch die Laufzeit durch das Koppelfeld noch größer und darüberhinaus werden für die Durchschaltung der Verbindungen entsprechend mehr Einstellbefehle benötigt.

Bei einem bekannten Zeitmultiplexkoppelfeld der eingangs erwähnten Art sind gleichgeordnete Ausgänge der Vermittlungseinheiten innerhalb der einzelnen Koppelfeldteile miteinander verbunden und an jeweils eine Zeitmultiplexleitung für abgehende Übertragungsrichtung angeschlossen. Wegen der angegebenen Art des Anschlusses der Zeitmultiplexleitungen für ankommende Übertragungsrichtung an die Vermittlungseinheiten kann daher bei Ausfall eines Koppelfeldteils der bis dahin darüber geleitete Verkehr bei relativ geringer Blockierung über die übrigen intakten Koppelfeldteile abgewickelt werden.

Die miteinander verbundenen Ausgänge der Vermittlungseinheiten sind dabei sogenannte Tristate-Ausgänge, durch die die Binärwerte 1 und 0 sowie der Ruhezustand durch drei unterschiedliche Signalpegel dargestellt werden. Während im ordnungsgemäßen Betrieb gewährleistet ist, daß zwei miteinander verbundene Ausgänge nicht gleichzeitig während einer Zeitlage dem aktiven Zustand annehmen, kann es in der Einschaltphase doch dazu kommen, was dann, wenn von einem Eingang der Binärwert 1 und vom anderen der Binärwert 0 geliefert wird, zu einer Zerstörung der betreffenden, die Ausgänge bildenden Bauelemente der Vermittlungseinheiten führen kann. Ebenfalls in der Einschaltphase kann es dazu kommen, daß die Aussendung von während nichtbelegter Zeitphasen gesendeten Freikanalcodeworten, die normalerweise von der Vermittlungseinheit ausgeht, von der aus eine vorher bestehende Verbindung während der betreffenden Zeitlage ausgelöst worden ist, nicht ordnungsgemäß funktioniert.

Bei einem anderen bekannten Zeitmultiplexkoppelfeld, das ebenfalls aus mehreren Koppelfeldteilen besteht und unter Verwendung von Koppelfeldeinheiten aufgebaut ist, wobei allerdings die Koppelfeldteile jeweils dreistufig in Form einer reinen Raumstufe und eingangsseitig und ausgangsseitig an diese Raumstufe angeschlossenen lediglich der Zeitkanalumsetzung dienenden Zeitstufen in Zeit-Raum-Zeit-Struktur aufgebaut sind und bei dem die Gliederung in Baueinheiten in der Weise vorgenommen ist, daß jeweils die Zeitstufen jedes Koppelfeldteils und die Raumstufe des ganzen Koppelfeldes eine Baueinheit bilden, sind ebenfalls Maßnahmen getroffen, die bei Ausfall wenigstens einer der Zeitstufenbaueinheiten dazug führen sollen, daß Verkehrsverluste dabei relativ gering bleiben. Diese Maßnahmen bestehen darin, daß je Koppelfeldteil eingangsseitig und ausgangsseitig ein Multiplexer vorgesehen ist, an dessen Eingänge die PCM-Leitungen für ankommende Übertragungsrichtungen bzw. die von den ausgangsseitigen Zeitstufenbaueinheiten kommenden PCM-Leitungen für abgehende Übertragungsrichtung angeschlossen sind, so daß bei Ausfall von Zeitstufeneinheiten eines Koppelfeldteils wenigstens ein Teil des dann über diesen Koppelteil nicht abwickelbaren Verkehrs über die übrigen Koppelfeldteile abgewickelt werden kann. Maßnahmen, die einer Aufrechterhaltung des Verkehrs bei Ausfall der Raumstufenbaueinheit dienen könnten, sind bei diesem bekannten Zeitmultiplexkoppelfeld nicht vorgesehen.

Aufgabe der vorliegenden Erfindung ist es daher, ein Zeitmultiplexkoppelfeld anzugeben, das ebenfalls wie das eingangs erwähnte Zeitmultiplexkoppelfeld, von dem ausgegangen wird, die Nachteile mehrstufiger Koppelfelder vermeidet, darüber hinaus aber auch frei von den erwähnten Problemen der Zusammenschaltung von Ausgängen einzelner Vermittlungseinheiten ist.

Erfindungsgemäß wird diese Aufgabe bei dem Zeitmultiplexkoppelfeld der eingangs erwähnten Art dadurch gelöst, daß ein solches Koppelfeld je Koppelfeldteil eine der Anzahl der Vermittlungseinheiten gleiche Anzahl weiterer mit diesen Vermittlungseinheiten baugleicher Baueinheiten umfaßt, die jedoch als Multiplexer betrieben werden, bei denen die Gesamtzahl der normalerweise ausgenutzten Multiplexerausgänge der Anzahl der bei diesem Koppelfeldteil an eine Vermittlungseinheit angeschlossenen Zeitmultiplexleitungen für ankommende Übertragungsrichtung gleicht, und bei denen wenigstens ein Teil der im Normalfall nicht ausgenutzten Ausgänge über normalerweise geöffnete Schalter mit jeweils einem anderen im Normalfall ausgenutzten Multiplexerausgang eines anderen Koppelfeldteils dann verbunden und zur Informationsabgabe ausgenutzt wird, wenn dieser andere Koppelfeldteil ausfällt.

Auch bei einem solcherart konzipierten Zeitmultiplex-Koppelfeld ist eine Redundanz vorhanden mit der Folge, daß bei Ausfall eines Koppelfeldteils der ursprünglich darüber geleitete Verkehr bei minimaler Blockierung über die übrigen Koppelfeldteile abgewickelt werden kann. Da es erst im Fehlerfall, also dann, wenn ein Koppelfeldteil ausfällt, zu einer Zusammenschaltung von normalerweise nicht ausgenutzten Ausgängen der als Multiplexer betriebenen Baueinheiten mit den Multiplexerausgängen von Baueinheiten des betreffenden ausgefallenen Koppelfeldteils kommt, entfallen die vorstehend geschilderten Schwierigkeiten bei der Verbindung von Tristate-Ausgängen.

Gemäß einer weiteren Ausgestaltung der Erfindung sind die einzelnen Koppelfeldteile bezüglich Stromversorgung und der Taktversorgung voneinander unabhängig, so daß die häufigsten Fehlerursachen, nämlich Defekte in der Strom- oder Taktversorgung jeweils nur Teile des Koppelfeldes betreffen und wegen der Möglichkeiten der blockierungsarmen Übernahme des Verkehrs durch andere Koppelfeldteile der Gesamtbetrieb im Fehlerfall nur relativ geringfügig gestört ist.

Nachstehend wird die Erfindung anhand von zwei Ausführungsbeispielen unter Bezugnahme auf die Zeichnung näher erläutert.

In der Zeichnung zeigen :

Figur 1  den beispielsweisen Aufbau einer Vermittlungseinheit, unter deren mehrfacher Verwendung das erfindungsgemäße Koppelfeld aufgebaut wird,

Figur 2  ein erstes Ausführungsbeispiel des erfindungsgemäßen Zeitmultiplexkoppelfeldes, das aus zwei Koppelfeldteilen besteht,

Figur 3  ein zweites Ausführungsbeispiel des erfindungsgemäßen Zeitmultiplexkoppelfeldes, das aus vier Koppelfeldteilen besteht.

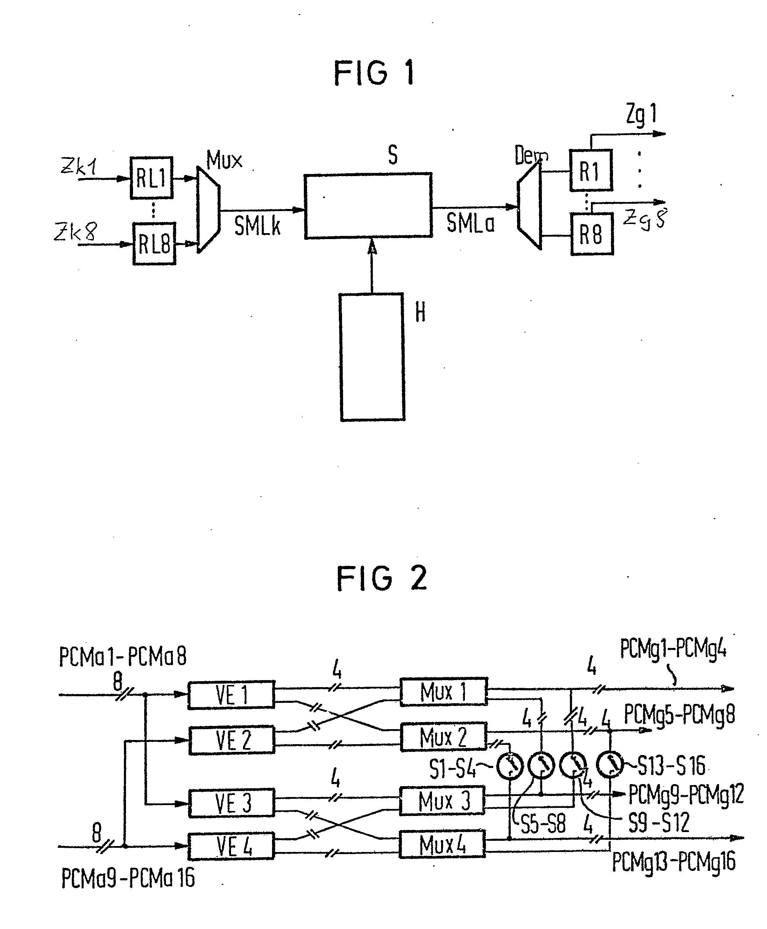

Die Vermittlungseinheit gemäß Figur 1 dient dem Anschluß von acht Zeitmultiplexleitungen. Auf der linken Seite der Figur sind dementsprechend die acht Leitungsadernpaare aus Zk1 bis Zk8 für ankommende Übertragungsrichtung dargestellt, während auf der rechten Seite der Figur die zugehörigen Leitungsadernpaare Zg1 bis Zg8 für abgehende Übertragungsrichtung dargestellt sind. Jedem der Zeitmultiplexleitungsadernpaare Zk1 bis Zk8 ist eine Einrichtung RL1 bis RL8 zugeordnet, die der Pulsrahmenerkennung auf dem Laufzeitausgleich dient. Die von den einzelnen Leitungsadernpaaren für ankommende Übertragungsrichtung stammenden Informationen, die diese Einrichtungen RL durchlaufen haben, werden durch einen Multiplexer Mux zeitlich verschachtelt und in dieser Form dann auf einer Supermultiplexleitung SMLk für ankommende Übertragungsrichtung weiter übertragen. Auf dieser Supermultiplexleitung herrscht unter der Voraussetzung einer Bittaktfrequenz von 2,048 Mbit/s auf den einzelnen Leitungsadernpaaren für ankommende Übertragungsrichtung eine Bittaktfrequenz von $8 \times 2{,}048$ Mbit/s.

Kernstück der Vermittlungseinheit gemäß Figur 1 ist eine Zeitkoppelstufe, die aus einem Sprachspeicher S und einem seiner Ansteuerung dienenden Haltespeicher H besteht. Dieser Sprachspeicher S besitzt für jede der gleichzeitig möglichen Verbindungen eine Speicherzelle, im Falle von acht angeschlossenen Zeitmultiplexleitungen, auf denen jeweils 32 Zeitkanäle gebildet sind, also 128 Speicherzellen zu jeweils acht Bit. Jede dieser Speicherzellen wird anhand eines Abtastpulsrahmens zweimal angesteuert, nämlich einmal zu der einem A-Teilnehmer zugeordneten Zeitlage und einmal zu der einem B-Teilnehmer dieser Verbindung zugeordneten Zeitlage. Aus diesem Grunde weist der Haltespeicher H die doppelte Anzahl von Speicherzellen auf, so daß die Adressen der Speicherzellen des Sprachspeichers S je zweimal gespeichert werden können. Über die erwähnte Supermultiplexleitung SMLk werden dem Sprachspeicher S die ankommenden Informationen zugeführt. Nach entsprechender Zwischenspeicherung werden sie über eine Supermultiplexleitung SMLa für gehende Übertragungsrichtung abgenommen und einem Demultiplexer Dem zugeführt, der sie auf die acht Leitungsadernpaare Zg1 bis Zg8 verteilt.

Das Auslesen aus dem Sprachspeicher S der Vermittlungseinheit gemäß Figur 1 wird so gesteuert, daß durch die Zwischenspeicherung nicht nur Zeitspannen zwischen Zeitlagen auf ankommenden Zeitmultiplexleitungen benutzter Zeitkanäle und Zeitlagen auf abgehenden Zeitmultiplexleitungen benutzter Zeitkanäle überbrückt werden, sondern dabei auch zeitliche Versetzungen zwischen Zeitinverallen vorgenommen werden, die auf den Supermultiplexleitungen innerhalb der Zeitlagen der Zeitkanäle den einzelnen angeschlossenen Zeitmultiplexleitungen für akommende bzw. für abgehende Übertragungsrichtung zugeordnet sind. Die zyklische Verteilung der Inhalte der erwähnten Zeitintervalle auf die einzelnen Zeitmultiplexleitungen für abgehende Übertragungsrichtung durch den Demultiplexer Dem führt daher dann auch zu einer entsprechenden räumlichen Vermittlung.

Das erfindungsgemäße Zeitmultiplexkoppelfeld gemäß Figur 2 besteht aus zwei Koppelfeldteilen, die jeweils zwei Vermittlungseinheiten VE1 und VE2 bzw. VE3 und VE4 umfassen. Bei diesen Vermittlungseinheiten handelt es sich um solche, die acht Anschlüsse für Zeitmultiplexleitungen für ankommende Übertragungseinrichtung und acht Anschlüsse für Zeitmultiplexleitungen für abgehende Übertragungsrichtung aufweisen.

Insgesamt sind an diese Vermittlungseinheiten 16 Zeitmultiplexleitungen PCMa 1 und PCMa 16 angeschlossen und zwar die ersten acht Zeitmultiplexleitungen PCMa 1 bis PCMa 8 an die acht Eingänge der einen Vermittlungseinheit VE1 der ersten Koppelfeldhälfte und an die acht Eingänge der einen Vermittlungseinheit VE3 der anderen Koppelfeldhälfte. Die übrigen acht Zeitmultiplexleitungen für ankommende Übertragungsrichtung PCMa 9 bis PCMa 16 sind an die Eingänge der anderen Vermittlungseinheit VE4 der zweiten Koppelfeldhälte und an die acht Eingänge der anderen Vermittlungseinheit VE2 der ersten Koppelfeldhälfte angeschlossen.

Außer der erwähnten Anzahl von Vermittlungseinheiten VE1 bis VE4 sind eine gleiche Anzahl von Baueinheiten Mux 1 bis Mux 4 Bestandteil dieses Zeitmultiplexkoppelfeldes, die baugleich zu den Vermittlungseinheiten VE1 bis VE4 sind, jedoch lediglich als Multiplexer betrieben werden.

Von den acht Eingängen dieser Baueinheiten sind jeweils vier mit Ausgängen der einen bzw. der anderen Vermittlungseinheit BE derselben Koppelfeldhälfte verbunden. So stehen beispielsweise vier Eingänge der Baueinheit Mux 1 mit vier Ausgängen der Vermittlungseinheit VE1 und die vier weiteren Eingänge dieser Baueinheit Mux 1 mit vier Ausgängen der Vermittlungseinheit VE2 in Verbindung.

Von den acht Ausgängen der Baueinheiten Mux 1 bis Mux 4 sind normalerweise jeweils nur vier für den Anschluß von Zeitmultiplexleitungen PCMg ausgenutzt, so daß insgesamt entsprechend der Anzahl von Zeitmultiplexleitungen PCMa für ankommende Übertragungsrichtung 16 Zeitmultiplexleitungen PCMg 1 bis PCMg 16 für gehende Übertragungsrichtung angeschlossen sind.

Die jeweils restlichen vier Ausgänge der Baueinheiten Mux 1 bis Mux 4 sind über jeweils einen Schalter S1 bis S16 mit jeweils einem der Ausgänge einer Baueinheit Mux der jeweils anderen Koppelfeldhälfte verbindbar, an die normalerweise Zeitmultiplexleitungen PCMg für gehende Übertragungsrichtung angeschlossen sind. So lassen sich beispielsweise die vier restlichen Ausgänge der Baueinheit Mux 1, die zur ersten Koppelfeldhälfte gehört, über Schalter S5 bis S8 mit jeweils einem anderen von Ausgängen der zur zweiten Koppelfeldhälfte gehörenden Baueinheit Mux 3 verbinden, an die die Zeitmultiplexleitungen für abgehende Übertragungsrichtung PCMg 9 bis PCMg 12 angeschlossen sind.

Die Schalter S1 bis S16 sind im Normalfall geöffnet und werden, wie noch erläutert werden wird, nur dann geschlossen, wenn eine der Koppelfeldhälften ausfällt.

Die Betriebsweise der Baueinheiten Mux 1 bis Mux 4 als Multiplexer bedeutet, daß eine Durchschaltung zu deren vier normalerweise ausgenutzten Ausgängen jeweils nur von zwei Eingängen aus möglich ist, von denen der eine mit einem Ausgang der ersten Vermittlungseinheit VE und der andere mit einem Ausgang der zweiten Vermittlungseinheit VE der betreffenden Koppelfeldhälfte verbunden ist. Die Durchschaltung erfolgt dabei in zyklischer Verschachtelung. Entsprechendes gilt für die normalerweise nicht ausgenutzten Ausgänge, so daß eine Baueinheit Mux also jeweils zwei Gruppen von vier Multiplexern umfaßt, die jeweils die auf zwei eingangsseitig angeschlossenen Zeitmultiplexleitungen auftretenden PCM-Informationen zusammenfassen.

Im Normalbetrieb, d. h. dann, wenn beide Koppelfeldteile intakt sind, seien die Schalter S1 bis S16 geöffnet. Die auf den Zeitmultiplexleitungen für ankommende Übertragungsrichtung PCMa 1 bis PCM 16 übertragenen Informationen verteilen sich auf beide Koppelfeldhälften. Da, wie eingangs angegeben, die Vermittlungseinheiten VE1 bis VE4 volle Erreichbarkeit gewährleisten, also jeweils den Verkehr von acht angeschlossenen Zeitmultiplexleitungen für ankommende Übertragungsrichtung bewältigen könnten, sind in diesem Normalfall diese Vermittlungseinheiten auch beim höchsten Verkehrsaufkommen nicht voll ausgelastet.

Fällt nun eine Koppelfeldhälfte aus, beispielsweise die die Vermittlungseinheiten VE3 und VE4 sowie die als Multiplexer ausgenutzten Baueinheiten Mux 3 und Mux 4 umfassende Koppelhälfte, dann werden durch einen entsprechenden Steuerbefehl die Schalter S1 bis S8 geschlossen, die die normalerweise nicht ausgenützten Ausgänge der Baueinheiten Mux 1 und Mux 2 der ersten Koppelfeldhälfte mit den Ausgängen der Ausgänge der zweiten Koppelfeldhälfte verbinden, an die die Zeitmultiplexleitungen für abgehende Übertragungsrichtung PCMg 9 bis PCMg 16 angeschlossen sind.

Derjenige Teil des Verkehrs, der bisher zu den Zeitmultiplexleitungen für abgehende Übertragungsrichtung PCMg 9 bis PCMg 16 über die zweite Koppelfeldhälfte abgewickelt worden ist, wobei es sich sowohl um auf die Zeitmultiplexleitungen für ankommende Übertragungsrichtung PCMa 1 bis PCMa 8 als auch auf den Zeitmultiplexleitungen PCMa 9 bis PCMa 16 angelieferte PCM-Informationen handeln kann, wird nunmehr ausschließlich über die erste Koppelfeldhälfte und über die entsprechenden Schalter S1 bis S8 zu diesen Multiplexleitungen für abgehende Übertragungsrichtung geführt. Wegen der im Normalfall vorliegenden verkehrsmäßigen Überdimensionierung der Vermittlungseinheiten dieser Koppelfeldhälfte sind dabei gegebenenfalls auftretende Blockierungen minimal.

Bei der nur im Ersatzschaltfall erfolgenden Zusammenschaltung von Ausgängen der Baueinheiten Mux 1 bis Mux 4 kann es nicht zu den erwähnten Problemen kommen, die die Zusammenschaltung von Ausgängen im Normalbetrieb beim eingangs diskutierten bekannten Zeitmultiplexkoppelfeld mit sich bringen.

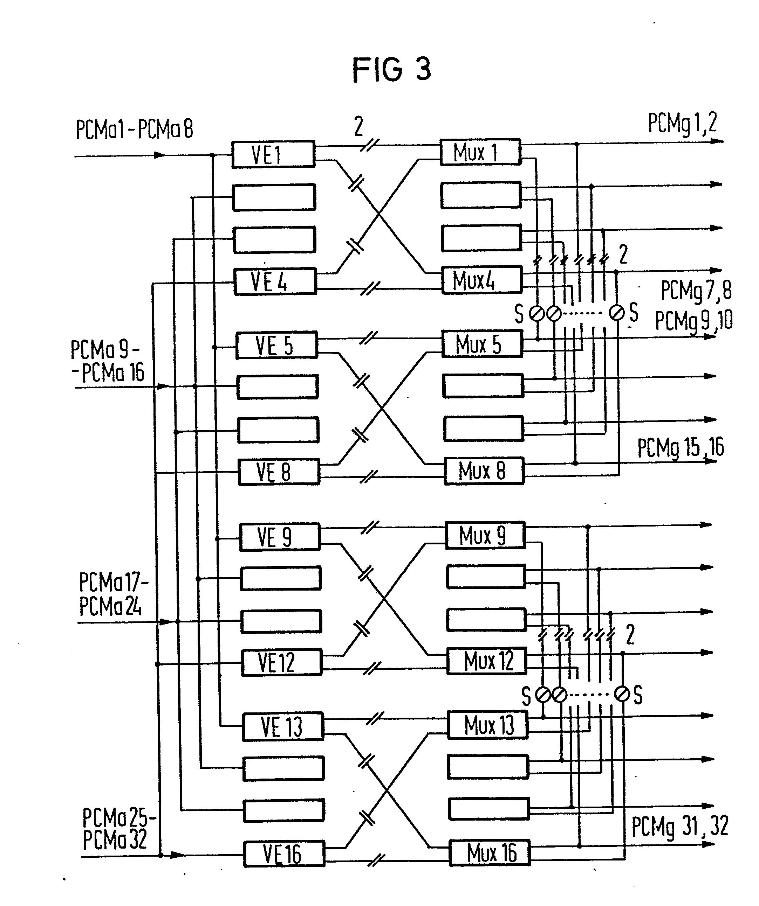

Das Ausführungsbeispiel des erfindungsgemäßen Zeitmultiplexkoppelfeldes gemäß Figur 3 besteht aus vier Koppelfeldteilen. Diese Koppelfeldteile fassen dementsprechend jeweils vier der eigentlichen Vermittlungseinheiten VE sowie die gleiche Anzahl von als Multiplexer betriebenen mit diesen Vermittlungseinheiten baugleichen Baueinheiten Mux. Die Eingänge der Vermittlungseinheiten VE sind in entsprechender Weise wie beim Ausführungsbeispiel gemäß Figur 2 mit Zeitmultiplexleitungen für ankommende Übertragungsrichtung PCMa 1 bis PCMa 32 verbunden, nämlich derart, daß jede der Zeitmultiplexleitungen mit jeweils einem anderen Eingang einer Vermittlungseinheit VE jedes Koppelfeldteils in Verbindung steht. So sind beispielsweise die Zeitmultiplexleitungen für ankommende Übertragungsrichtung PCMa 1 bis PCMa 8 jeweils einem der acht Eingänge der Vermittlungseinheit VE1 des ersten Koppelfeldteils, der Vermittlungseinheit VE5 des zweiten Koppelfeldteils, der Vermittlungseinheit VE9 des dritten Koppelfeldteils und der Vermittlungseinheit VE13 des vierten Koppelfeldteils verbunden.

Die Verbindung zwischen Ausgängen von Vermittlungseinheiten VE und Eingängen von als Multiplexer ausgenutzten Baueinheiten Mux innerhalb der einzelnen Koppelfeldteile ist derart, daß jede Vermittlungseinheit VE über jeweils zwei Zwischenleitungen mit jeder Baueinheit Mux in Verbindung steht.

Bei jeder der Baueinheiten Mux sind im Normalfall zwei Ausgänge ausgenutzt, an die die 32 Zeitmultiplexleitungen für abgehende Übertragungsrichtung, PCMg 1 bis PCMg 32 angeschlossen sind.

Zwei weitere normalerweise nicht ausgenutzte Ausgänge der Baueinheiten Mux sind über jeweils einen Schalter S mit gleichgeordneten Ausgängen einer Baueinheit Mux eines anderen Koppelfeldteils verbunden. So sind beispielsweise zwei weitere Ausgänge der Baueinheit Mux 1 im ersten Koppelfeldteil über Schalter S11 und S12 mit den Ausgängen der Baueinheit Mux 2 im zweiten Koppelfeldteil verbunden, an die die Zeitmultiplexleitungen für abgehende Übertragungsrichtungen PCMg 9 bzw. PCMg 10 angeschlossen sind. In entsprechender Weise sind normalerweise nicht ausgenutzte Ausgänge der übrigen Baueinheiten im ersten Koppelfeldteil mit Ausgängen der übrigen Baueinheiten im zweiten Koppelfeldteil verbunden, wie auch normalerweise nicht ausgenutzte Ausgänge von Baueinheiten Mux im zweiten Koppelfeldteil über Schalter S mit Ausgängen von Baueinheiten im ersten Koppelfeldteil verbindbar sind, an die Zeitmultiplexleitungen für abgehende Übertragungsrichtung PCMg angeschlossen sind.

Entsprechendes gilt für die gegenseitige Verbindung von Ausgängen von Baueinheiten Mux, die dem dritten und vierten Koppelfeldteil angehören.

Die übrigen vier Ausgänge der Baueinheiten Mux bleiben beim Ausführungsbeispiel gemäß Figur 3 in jedem Fall unausgenutzt.

Auch hier verteilt sich im Normalbetrieb, der über die Zeitmultiplexleitungen für ankommende Übertragungsrichtung PCMa 1 bis 32 anfallende Verkehr auf die vier Koppelfeldteile, je nachdem zu welcher Zeitmultiplexleitung für abgehende Übertragungsrichtung PCMg vermittelt werden soll. Im Falle des Ausfalls eines Koppelfeldteils wird der ursprünglich darüber abgewickelte Verkehr von demjenigen Koppelfeldteil mit übernommen, bei dem von Ausgängen von Baueinheiten Mux aus über Schalter S die Ausgänge des ausgefallenen Koppelfeldteils erreicht werden können, an die Zeitmultiplexleitungen für abgehende Übertragungsrichtung angeschlossen sind.

## Ansprüche

1. Zeitmultiplexkoppelfeld, insbesondere PCM-Zeitmultiplexkoppelfeld, aus jeweils die zeitliche und räumliche Zuordnung von auf Zeitmultiplexleitungen (PCMa) für ankommende Übertragungsrichtung benutzten Zeitkanälen zu auf Zeitmultiplexleitungen (PCMg) für abgehende Übertragungsrichtung benutzten Zeitkanälen bewirkenden, als blockierungsfrei arbeitende Zeitstufen ausgebildeten Vermittlungseinheiten (VE), an die jeweils mehrere Zeitmultiplexleitungen angeschlossen sind, bei dem wenigstens zwei einstufige Koppelfeldteile gebildet sind, die jeweils so viele Vermittlungseinheiten wie Koppelfeldteile umfassen und bei denen die an die Vermittlungseinheiten angeschlossenen Zeitmultiplexleitungen für ankommende Übertragungsrichtung auch mit jeweils einem Eingang einer Vermittlungseinheit jedes anderen Koppelfeldteils in Verbindung stehen, dadurch gekennzeichnet, daß es je Koppelfeldteil eine der Anzahl der Vermittlungseinheiten (VE) gleiche Anzahl weiterer mit diesen Vermittlungseinheiten baugleicher Baueinheiten (Mux) umfaßt, die jedoch als Multiplexer betrieben werden, bei denen die Gesamtzahl der normalerweise ausgenutzten Multiplexerausgänge der Anzahl der bei diesem Koppelfeldteil an eine Vermittlungseinheit angeschlossenen Zeitmultiplexleitungen für ankommende Übertragungsrichtung (PCMa) gleicht und bei denen wenigstens ein Teil der im Normalfall nicht ausgenutzten Ausgänge über normalerweise geöffnete Schalter (S) mit jeweils einem anderen im Normalfall ausgenutzten Multiplexerausgang eines anderen Koppelfeldteils dann verbunden und zur Informationsabgabe ausgenutzt wird, wenn dieser andere Koppelfeldteil ausfällt.

2. Zeitmultiplexkoppelfeld nach Anspruch 1, dadurch gekennzeichnet, daß seine Koppelfeldteile bezüglich der Stromversorgung und der Taktversorgung von einander unabhängig sind.

## Claims

1. A time division multiplex switching network, in particular a PCM time division multiplex switching network, cc ¬prising switching units (VE) which respectively effect the time- and space-allocation of time channels, which are used on t.d.m. lines (PCMa) for the incoming transmission direction, to time channels, which are used on t.d.m. lines (PCMg) for the outgoing transmission direction, and are designed as time stages which operate in a non-blocking fashion, and to which switching units are respectively connected a plurality of t.d.m. lines, in which t.d.m. switching network at least two single-stage switching network sections are formed which respectively comprise as many switching units as switching network sections and in which switching network sections the t.d.m. lines for the incoming transmission direction, which are connected to the switching units, are also respectively connected to an input of a switching unit of each of the other switching network sections, characterised in that for each switching network section, the t.d.m. switching network comprises a number, which is identical to the number of switching units (VE), of further constructional units (Mux), which are constructionally identical to the switching units, but which are operated as multiplexers, wherein the total number of the usually utilised multiplex outputs equals the number of the t.d.m. lines for the incoming transmission direction which are connected to a switching unit in this switching network section, and wherein at least a portion of the outputs, which are not normally utilised are connected via usually open switches (S) to another usually utilised multiplexer output of another switching network section and utilised for the information transmission when the other switching network section fails.

2. A time division multiplex switching network as claimed in claim 1, characterised in that its switching network sections are independent of one another in respect of the current supply and the clock pulse supply.

**Revendications**

1. Champ de couplage à multiplexage temporel, notamment champ de couplage à multiplexage temporel MIC, constitué par des unités de commutation (VE) qui sont réalisées sous la forme d'étages temporels travaillant sans aucun blocage et qui réalisent respectivement l'association temporelle et spatiale de canaux temporels utilisés dans des lignes de multiplexage temporel (PCMa) pour le sens de transmission d'arrivée, à des canaux temporels utilisés dans des lignes de multiplexage temporel (PCMg) pour le sens de transmission de départ, et auxquelles sont raccordées respectivement plusieurs lignes de multiplexage temporel, et dans lequel il est prévu au moins deux parties à un étage du champ de couplage, qui comportent respectivement autant d'unités de commutation qu'il y a de parties du champ de couplage et dans lesquelles les lignes de multiplexage temporel raccordées aux unités de commutation pour le sens de transmission d'arrivée sont également reliées respectivement à une entrée d'une unité de commutation de chaque autre partie du champ de couplage, caractérisé par le fait que chaque partie du champ de couplage possède un nombre, égal au nombre des unités de commutation (VE), de modules supplémentaires (Mx) qui possèdent la même constitution que ces unités de commutation, mais fonctionnent en tant que multiplexeurs et pour lesquels le nombre total des sorties normalement utilisé des multiplexeurs est égal au nombre des lignes de multiplexage temporel, raccordées pour cette partie du champ de couplage à une unité de commutation, pour le sens de transmission d'arrivée (PCMa) et pour lesquels au moins une partie des sorties non utilisées dans le cas normal sont reliées par l'intermédiaire de commutateurs (S) normalement ouverts, à respectivement une autre sortie des multiplexeurs, utilisée dans le cas normal, d'une autre partie du champ de couplage, et sont utilisées pour la délivrance d'une information lorsque cette autre partie du champ de couplage est défaillante.

2. Champ de couplage à multiplexage temporel suivant la revendication 1, caractérisé par le fait que ces parties du champ de couplage sont indépendantes les unes des autres du point de vue de l'alimentation en courant et de l'alimentation de la cadence.

# FIG 1

# FIG 2

1

# FIG 3